Europäisches Patentamt

**European Patent Office**

**Office européen des brevets**

(19)

(11) Numéro de publication: **0 105 794**
**B1**

(12) # FASCICULE DE BREVET EUROPÉEN

(45) Date de publication du fascicule du brevet:
13.08.86

(51) Int. Cl.⁴: **B 60 K 5/12,** F 16 F 9/30

(21) Numéro de dépôt: **83401882.2**

(22) Date de dépôt: **27.09.83**

(54) Support élastique antivibratoire.

(30) Priorité: **28.09.82 FR 8216279**

(43) Date de publication de la demande:
**18.04.84 Bulletin 84/16**

(45) Mention de la délivrance du brevet:
**13.08.86 Bulletin 86/33**

(84) Etats contractants désignés:
**BE DE FR GB IT NL SE**

(56) Documents cité:
**EP-A-0 059 936**
**CH-A-577 126**
**DE-A-2 454 834**
**DE-A-2 533 068**
**DE-A-2 712 641**
**DE-A-2 717 825**
**DE-A-2 730 046**
**FR-A-2 218 508**
**FR-A-2 348 401**
**FR-A-2 451 511**
**GB-A-2 055 172**
**GB-A-2 079 894**

PATENTS ABSTRACTS OF JAPAN, vol. 4, no. 171
(M-44) 653 , 26 novembre 1980
PATENTS ABSTRACTS OF JAPAN, vol. 4, no. 64 (M-11) 546 , 14 mai 1980, page 134 M 11
PATENTS ABSTRACTS OF JAPAN, vol. 6, no. 224

(73) Titulaire: **COMPAGNIE DES PRODUITS INDUSTRIELS DE L'OUEST (C.P.I.O.), Boîte Postale 1226 Zone Industrielle de Nantes Carquefou, F-44023 Nantes Cedex (FR)**

(72) Inventeur: **Gallas, Gérard, 46, boulevard des Poilus, F-44300 Nantes (FR)**
Inventeur: **Renzo, Bernard, 14, avenue de l'Archipel, F-44300 Nantes (FR)**
Inventeur: **Raher, Loic, 16, rue Georges Meynieu Bâriment 2, F-44300 Nantes (FR)**

(74) Mandataire: **Réal, Jacques, Régie Nationale des Usines Renault SCE 0804, F-92109 Boulogne Billancourt Cedex (FR)**

(56) Documents cité: (suite)
**(M-170) 1102 , 9 novembre 1982**

## Description

La présente invention se rapporte à un support élastique antivibratoire à dispositif amortissant incorporé, applicable notamment à la suspension de groupes motopropulseurs de véhicules automobiles.

On sait que de tels supports élastiques ont pour rôle principal de filtrer les vibrations dûes aux imperfections d'équilibre du moteur. A ce titre, ces supports doivent présenter une grande souplesse. Malheureusement celle-ci conduit à une détérioration importante du confort sous l'effet des trépidations à basse fréquence, provenant de la route; ces dernières sont transmises du fait d'un amortissement insuffisant des supports généralement réalisés en élastomère. En d'autres termes les caractéristiques souhaitées sont:

— une rigidité statique bien définie, car le rôle premier d'un tel support est de porter la charge statique qui lui est appliquée;
— un certain amortissement, lors des sollicitations de fréquences basses de 10 à 20 Hertz et d'amplitudes fortes de l'ordre de 0,5 à 5 mm, afin de limiter les vibrations de la masse suspendue;
— une faible rigidification dynamique aux hautes fréquences de 50 à 300 Hertz environ, afin de conserver de bonnes caractéristiques de filtrage de ces vibrations, génératrices de bruit.

Une des propriétés des matériaux visco-élastiques du type élastomère est l'augmentation du taux de rigidification dynamique avec la fréquence, donc la dégradation progressive du filtrage des vibrations. Cette augmentation est d'autant plus prononcée que le mélange est amortissant. Les progrès réalisés dans la formulation des mélanges aboutissent souvent à des compromis acceptables. Toutefois, il semble que l'on atteigne actuellement la limite des possibilités d'amélioration par ce moyen.

On connaît déjà des dispositifs permettant de séparer la fonction "amortissement" de la fonction "rigidité". L'un d'entre eux associe un support élastique souple à un amortisseur, mais cette solution est coûteuse et inefficace pour amortir des oscillations de faibles amplitudes, du fait des frottements mécaniques dans les amortisseurs. De plus, l'implantation des amortisseurs peut être particulièrement difficile dans le volume exigu d'un compartiment moteur.

D'autres solutions consistent à incorporer au support lui-même un moyen d'amortissement hydraulique ou pneumatique en utilisant les déformations du support lui-même pour déplacer un fluide à travers un orifice. Ces solutions ne sont pas parfaitement satisfaisantes car elles ne prennent pas suffisamment en compte l'existence de vibrations d'amplitudes différentes. De plus, ces dispositifs présentent généralement un encombrement important, n'apportent un gain d'amortissement que globalement suivant une seule direction de sollicitation et ne permettent pas l'obtention, généralement souhaitée par les constructeurs automobiles d'un rapport donné des rigidités suivant deux directions perpendiculaires.

On connaît déjà du document Patents Abstracts of Japan, volume 4 No. 171 (M. 44), page 653 (=JP—A—55.123032), un support élastique antivibratoire pour groupe motopropulseur de véhicules automobiles, constitué d'un bloc creux en élastomère adhérisé à deux armatures rigides respectivement supérieure et inférieure, et d'un boîtier contenant un matériau amortissant dans lequel se meut un piston. Toutefois ce boîtier est seulement partiellement rempli d'un matériau déformable par apport extérieur d'énergie et absorption de cette dernière.

Le brevet britannique GB—A—2 079 894 se rapporte à un support élastique constitué d'un corps tubulaire réuni à un élément de fixation supérieur au moyen d'un anneau en élastomère; un diaphragme en élastomère sépare le corps tubulaire en deux parties, dont l'une, inférieure, est remplie d'un liquide amortissant, dans lequel se meut un piston, dont la tige traverse le diaphragme et se solidarise à l'élément de fixation supérieure.

Par ailleures, il existe des dispositifs d'absorption d'énergie constitués d'enceintes déformables et communiquantes partiellement remplis de billes de verre (DE—A—2533088).

La présente invention se rapporte à un support élastique antivibratoire pour groupe motopropulseur de véhicules automobiles conforme à celui decrit dans le JP—A—55—123032 qui diffère des dispositifs antérieurs en particulier par ses bonnes performances de filtration des hautes fréquences. A cette fin, un tel support élastique est caractérisé par le fait que le piston est fixé à la base de l'armature inférieure et que la partie supérieure du piston est adhérisée à la face inférieure d'un élément en élastomère fixé par sa périphérie entre l'armature inférieure et la zone supérieure du boîtier, tandis qu'un second boîtier est adhérisé à la face supérieure dudit élément et contient la base évasée, pourvue de cales en élastomère inférieure et supérieure, d'une tige de solidarisation du boîtier à l'armature. Une autre amélioration découlant de l'emploi du dispositif selon l'invention résulte des performances du matériau déformable spécifique à l'invention, dit "matériau amortissant".

L'invention sera décrite au regard des figures 1 à 3 ci-jointes, qui représentent à titre non limitatif:

— la figure 1: une coupe transversale d'une réalisation selon l'état de la technique antérieure;
— la figure 2: une première amélioration du dispositif de la figure 1 selon une vue en coupe transversale, selon l'état de la technique antérieure;
— la figure 3: le support élastique antivibratoire selon l'invention, vu en coupe transversale.

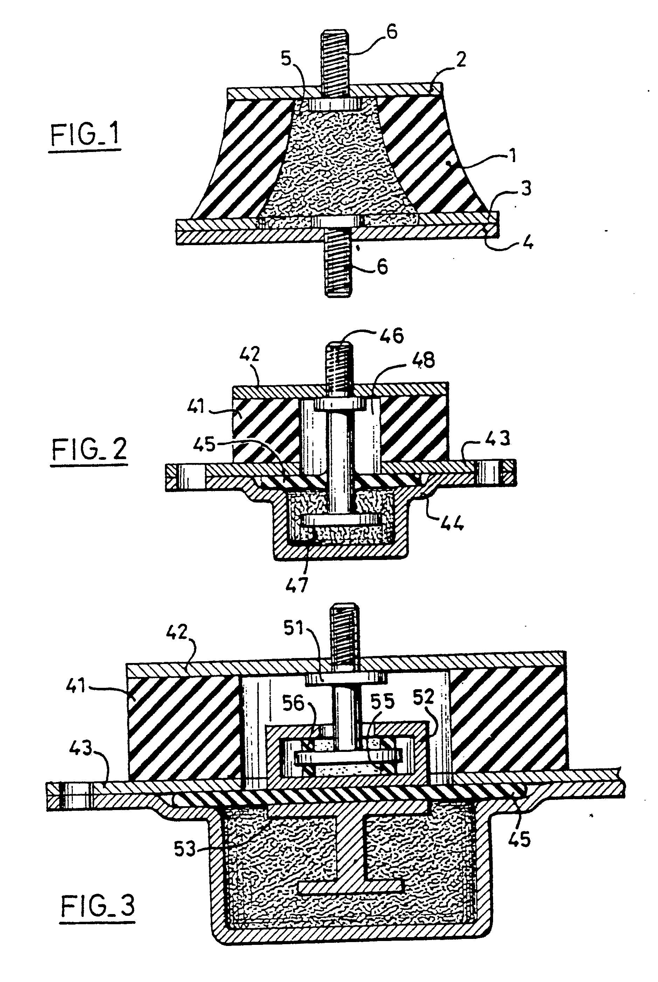

En se rapportant à la figure 1, on voit un support élastique antivibratoire selon l'état de la technique antérieure, éssentiellement constitué d'un bloc 1 tronconique, creux en élastomère, adhérisé lors de sa vulcanisation aux armatures rigides 2 et 3. Une armature inférieure complémentaire 4 est liée solidement et hermétiquement à l'armature 3. Les armatures 2 et 4 comportent des éléments mécaniques permettant la fixation du support à son poste de travail. Ces éléments mécaniques peuvent être des vis 6 soudées comme dans le cas de la figure 1. La chambre étanche 5 ainsi constituée est remplie totalement ou partiellement d'un volume de matériau amortissant.

Un matériau performant devra posséder une viscosité dynamique comprise entre $10^{-2}$ et $10^{33}$ Poiseuille à température ambiante.

De bons résultats ont été obtenus par exemple avec le matériau dénommé "Gomme GSIR" distribué par la Société Rhone-Poulenc.

Le matériau amortissant peut aussi être un fluide non newtonien et parmi ceux-ci certains peuvent avoir des propriétés tixotropiques ou rhéopexique. Par exemple, on pourra utiliser une dissolution de polyméthacrylate de méthyle dans une huile de synthèse appropriée; ou un matériau comprenant au moins une phase liquide formée d'huile de silicone, de polyglycol, d'huile minérale et/ou d'un ester d'acide carbonique aliphatique ou aromatique, saturé.

On améliorera très sensiblement les propriétés des matériaux ci-dessus en leur incorporant du graphite broyé et au moins un agent mouillant.

En variante, un autre matériau amortissant est constitué d'une dispersion visqueuse non newtonienne comportant une huile de type de silicone, de viscosité comprise entre 10 et $10^4$ poiseuille à température ambiante dans laquelle on ajoutera des billes de verre uniformément réparties, dont la granulométrie est comprise entre 40 et 90 microns. Le rapport des masses de ces billes de verre sur l'huile au silicone est de l'ordre de 3 à 8.

Dans le cas de ce dernier matériau, la dissipation d'énergie recherchée sera majorée des frottements des billes de verre les unes contre les autres, déterminant de ce fait un bon amortissement des vibrations issues du moteur.

Le remplissage avec le matériau ammortissant s'effectue avant ou après fixation de l'armature 4 sur l'armature 3. Dans ce dernier cas, au moins une des armatures 2 ou 4 doit être munie d'un dispositif permettant le remplissage de la chambre 5, par exemple un orifice, qui doit assurer une étanchéité parfaite de la chambre 5 après remplissage.

Le support qui vient d'être décrit fonctionne de la façon suivante: Les déformations de caoutchouc 1 s'effectuant à volume constant, tout déplacement relatif des armatures 2—3 entraîne une déformation de la géométrie de la chambre 5 et par conséquent du matériau amortissant qu'elle contient, d'où un gain appréciable, sur la valeur de l'amortissement.

On voit immédiatement que la valeur de ce gain dépend:

— de l'amplitude du déplacement considéré;
— du matériau amortissant utilisé, particulièrement de sa plus ou moins grande incompressibilité et de sa qualité amortissante pour un déplacement donné;
— de la géométrie du bloc en élastomère. Les essais ont montré que celle-ci a une importance considérable.

Une amélioration du dispositif ci-dessus est visible à la figure 2. Selon cette variante appartenant à l'état de la technique, le support comprend un bloc en élastomère 41 adhérisé lors de sa vulcanisation aux armatures 42 et 43. Un élément en élastomère 45 est lié solidement et hermétiquement à un élément 46 appelé "piston", par exemple par adhérisation lors de sa vulcanisation de l'élément 45. Cet ensemble 45, 46 est lié solidement et hermétiquement à l'armature 42, par tout moyen connu, tel que sertissage, etc. Un boîtier 44 est fixé à l'armature 43 en exerçant une contrainte permanente sur l'élément 45. On constitue ainsi une chambre étanche 47 que l'on remplit comme précédemment d'un matériau amortissant. La chambre 48 est étanche et remplie d'air. Le support de la figure 4 fonctionne de la façon suivante:

Tout déplacement relatif aux armatures 42 et 43 entraîne un déplacement relatif du piston 46 dans la chambre 47 et par conséquent une déformation du matériau amortissant.

Les avantages de ce dispositif par rapport à celui de la figure 1 sont les suivants:

— une valeur plus élevée du gain d'amortissement: En effet, pour un déplacement relatif donné des armatures 42 et 43, la déformation du matériau amortissant est beaucoup plus importante, sous réserve de bien choisir la géométrie de l'élément 46 présent dans la chambre 47.
— une dispersion plus faible sur l'amortisseur: Elle est obtenue compte-tenu des plus faibles dispersions dimensionnelles des éléments métalliques 44 et 46 par rapport aux éléments caoutchouc homologues de la figure 1. En effet, il est bien connu que, notamment, en ce qui concerne la rigidité d'un élément caoutchouc, la réalisation en série ne peut la respecter qu'à ±15%. Il en découle donc des dispersions importantes de la variation géométrique de la chambre 5 des dispositifs du type de la figure 1, pour un déplacement relatif donné des armatures 2 et 3. Avec les dispositifs du type de la figure 2, on élimine cet inconvénient puisque la chambre 47 et le piston 46 sont essentiellement rigides.

On utilisera de préférence le dispositif du type de la figure 2, lorsque l'on recherchera des valeurs très élevées d'amortissement. Ce résultat sera obtenu en choisissant la géométrie du piston 46 de façon à ce que la déformation du matériau absorbant soit maximale pour un déplacement relatif donné des armatures 42 et 43. Dans ce cas, l'amortissement sera important même si ce déplacement relatif est de très faible amplitude; ceci entraîne donc une rigidité élevée pour des vibrations à haute fréquence et par conséquent une légère dégradation du confort acoustique.

Pour remédier à cet inconvénient, on améliorera cette première variante en la modifiant selon l'invention dans le sens de la figure 3 selon laquelle le piston 46 de la figure 2 est remplacé par un dispositif appelé "piston filtré", qui autorise des déplacements relatifs des parties 51—52 sans que le piston 53 ne déforme le matériau amortissant, ces déplacements relatifs étant étroitement liés au jeu mécanique, choisi arbitrairement, et réalisé lors de l'assemblage des parties 51 et 52.

Selon cette réalisation, le piston 46 et sa tige de maintient constituant une seule pièce, selon la figure 2, sont fractionnées en trois parties, respectivement 53, 52 et 51. Le piston proprement dit figuré par la partie 53, ainsi que la partie 52 qui lui fait face sont adhérisés à l'élément en élastomère 45 au moment de sa vulcanisation.

La partie 52 constitue un container dont les rebords seront sertis, après introduction de la partie 51 de maintien à l'armature 42, évitant ainsi son dégagement ultérieur. La base de ladite partie 51 présente un évasement sur les faces duquel sont liées des cales en élastomère 55—56 destinées à assurer le centrage des deux parties 52—51.

Le dispositif ci-dessus autorise donc de faibles déplacements relatifs des parties 51—52 sans que le piston 53 ne déforme le matériau amortissant, d'où un faible amortissement et par suite une basse rigidité à haute fréquence. Par contre, pour des déplacements plus importants (par exemple supérieurs à 0,2 mm) les cales en élastomère 55 et 56 s'aplatissent. L'évasement inférieur de la partie 51 étant alors en butée sur la partie 52, l'entraîne dans son déplacement, déformant alors le matériau amortissant par l'intermédiaire de l'élément 53, ce qui détermine ainsi un amortissement élevé.

### Revendications

1. Support élastique antivibratoire, notamment pour groupe motopropulseur de véhicules automobiles, constitué par un bloc creux en élastomère (41) adhérisé lors de sa vulcanisation à deux armatures rigides respectivement supérieure (42) et inférieure (43), un boîtier (44) contenant un matériau amortissant dans lequel se meut un piston (53) caractérisé par le fait que le piston (53) est fixé à la base de cette dernière, et que la partie supérieure du piston (53) est adhérisée à la face inférieure d'un élément en élastomère (45) fixé par sa périphérie entre l'armature inférieure (43) et la zône supérieure du boîtier (44), tandis qu'un second boîtier (52) est adhérisé à la face supérieure dudit élément (45) et contient la base évasée, pourvue de cales en élastomère inférieure (55) et supérieure (56), d'une tige (51) de solidarisation du boîtier (52) à l'armature (42).

2. Support élastique antivibratoire selon la revendication 1, caractérisé en ce que le matériau amortissant dans lequel se meut le piston (53), du type non newtonien connu en soi, est chargé de particules solides.

3. Support selon la revendication 2, caractérisé en ce que les particules solides sont constituées à partir de graphite broyé.

4. Support selon la revendication 2, caractérisé en ce que les particules solides sont des billes de verre dont la granulométrie est comprise entre 40 et 90 microns.

5. Support selon la revendication 2, caractérisé en ce que le support des masses des billes de verre sur le matériau non newtonien est compris entre 3 et 8.

### Patentansprüche

1. Elastisches Antischwingungslager, insbesondere für den Antriebsblock von Kraftfahrzeugen, bestehend aus einem Hohlblock aus Elastomer (41), der während seiner Vulkanisation mit einem oberen steifen Beschlag (42) und einem unteren steifen Beschlag (43) verbunden wird, wobei ein Gehäuse (44) ein Dämpfungsmaterial enthält, in dem sich ein Kolben (53) bewegt, dadurch gekennzeichnet, daß der Kolben (53) am Grundteil des letzteren befestigt ist und daß der obere Teil des Kolbens (53) mit der unteren Fläche eines Elastomerteils (45) befestigt ist, dessen Umfang zwischen dem unteren Beschlag (43) und dem oberen Abschnitt des Gehäuses (44) befestigt ist, während ein zweites Gehäuse (52) an der oberen Fläche des Teils (45) befestigt ist und das hohle Grundteil einer Verbindungsstange (51) des Gehäuses (52) mit dem Beschlagteil (42) enthält, in dem untere Stützteile (55) und obere Stützteile (56) angeordnet sind.

2. Elastisches Antischwingungslager nach Anspruch 1, dadurch gekennzeichnet, daß das Dämpfungsmaterial, in dem sich der an sich bekannte Kolben (53) vom Typ nicht-Newton bewegt, mit festen Teilchen gefüllt ist.

3. Lager nach Anspruch 2, dadurch gekennzeichnet, daß die festen Teilchen aus gemahlenem Graphit bestehen.

4. Lager nach Anspruch 2, dadurch gekennzeichnet, daß die festen Teilchen Glaskugeln sind, deren Korngröße zwischen 40 und 90 Micron liegt.

5. Lager nach Anspruch 2, dadurch gekennzeichnet, daß das Massenverhältnis der Glaskugeln zum nicht-Newtonschen Material zwischen 3 und 8 liegt.

### Claims

1. Anti-vibration elastic mounting, in particular for the power unit in motor vehicles, formed by a hollow block (41) of elastomer which is caused to adhere upon vulcanization thereof to two rigid reinforcement members, an upper reinforcement member (42) and a lower reinforcement member (43) respectively, a casing (44) containing a damping material in which a piston (53) moves, characterised in that the piston (53) is fixed to the base of said lower reinforcement member and that the upper part of the piston (53) is caused to adhere to the lower face of an elastomer element (45) fixed by its periphery between the lower reinforcement member (43) and the upper region of the casing (44) while a second casing (52) is caused to adhere to the upper face of said element (45) and contains the enlarged base, which is provided with upper and lower packing members (55, 56) of elastomer, of a rod (51) fixing the casing (52) to the reinforcement member (42).

2. An anti-vibration elastic mounting according to claim 1 characterised in that the damping material in which the piston (53) moves, of per se known non-Newtonian type, is filled with solid particles.

3. A mounting according to claim 2 characterised in that the solid particles are formed from crushed graphite.

4. A mounting according to claim 2 characterised in that the solid particles are glass balls whose grain size is between 40 and 90 microns.

5. A mounting according to claim 2 characterised in that the ratio of the masses of the glass balls to the non-Newtonian material is between 3 and 8.

FIG_1

FIG_2

FIG_3